Europäisches Patentamt

European Patent Office

Office européen des brevets

(19)

(11) Publication number: **0 048 517**

**A1**

(12) # EUROPEAN PATENT APPLICATION

(21) Application number: **81201027.0**

(22) Date of filing: **14.09.81**

(51) Int. Cl.³: **F 24 D 3/08**
**F 24 D 3/00**

(30) Priority: **18.09.80 NL 8005222**

(43) Date of publication of application:
**31.03.82 Bulletin 82/13**

(84) Designated Contracting States:
**BE DE FR GB NL SE**

(71) Applicant: **AWB Apparatenfabriek Warmtebouw B.V.**
**P.O. Box**
**NL-5740 AA Beek en Donk(NL)**

(72) Inventor: **Siebelt, Dirk Bernardus Lambertus**
**No.13, Korhoenhof**
**NL-5672 VG Nuenen(NL)**

(74) Representative: **Konings, Lucien Marie Cornelis**
**Joseph et al,**
**OCTROOIBUREAU ARNOLD & SIEDSMA Sweelinckplein**
**1**
**NL-2517 GK Den Haag(NL)**

(54) **A district or block heating system.**

(57) A district or block heating system, in which each individual dwelling heat consuming installation connected through a heat exchanger (4) to a ring main (1,2), in which a hot fluid is circulated, is so constructed as to have the space heating radiators (13) and the primary space (15) of a second heat exchanger (16) for tap-water heating located in a secondary circuit connected to the secondary space (9) of the first mentioned heat exchanger (4) and to control the current of hot fluid through the primary space (3) of the first heat exchanger (4) by the quantity of heat required in the dwelling installation in question.

FIG.1

EP 0 048 517 A1

Croydon Printing Company Ltd.

-1-

The invention relates to a district or block heating system comprising a primary pipe circuit and a plurality of individual composite heat consuming installations intended at least for space heating and tap-water heating, said primary circuit containing a first heating fluid and being provided with a source of heat for heating said fluid, each one of said heat consuming installations including at least a secondary pipe circuit, in which a second heating fluid is contained, appliances for space heating and a device for heating tap-water, said secondary pipe circuit being thermally coupled through a first heat exchanger with said primary pipe circuit and through a second heat exchanger with the tap-water conduit of said device.

A district or block heating system of this kind has been disclosed by the published European patent application no. 0.000.401. In this system the heat consumers, such as the space heating applicances (the radiators of the central heating system) and the tap-water heating device (for instance a domestic boiler), are connected to the secondary pipe circuit through the second heat exchanger and for the heat transfer water is vaporized inthe first heat exchanger and the produced steam is condensated in the second heat exchanger.

The regulation of the system is effected by controlling the quantity of water which is vaporized per unit of time in the second pipe circuit. This two-phase system is costly and it is difficult to control it accurately. Furthermore, it introduces additional losses and in most cases it requires a third heat exchanger to make hot tap-water.

The invention has the object to provide a heating system with individual heat consuming installations which are each thermally coupled with the primary pipe circuit through a heat exchanger, said system having the advantages of such a system, such as allowing much higher temperatures and pressures and the use of thinner and easierly insulatable, consequently, cheaper conduits in the primary pipe circuit, whereby the losses in said circuit are considerably reduced, and the danger of contact, due to leakage, between tap-water and the possibly toxic heating fluid contained in the primary circuit is considerably restricted, but said system missing the disadvantages of the known heating system. This is achieved in that the space heating appliances are directly inserted in the secondary pipe circuit and means for regulating , by the heat consumption, the current of the heating fluid flowing through the primary space of the first heat exchanger are provided. In this system the temperature of the heating fluid (mostly water) contained in the secondary pipe circuit is considerably lower than that of the steam contained in the known system, so that a better and cheaper heat insulation is possible and smaller losses are to be expected. Furthermore, the secondary system of conduits can be constructed for lower pressures and the regulation of the quantity of heat to be transferred is effected by controlling the current of heating fluid flowing through the primary space of the first heat exchanger, which regulations can be performed accurately in a simple way. The heat exchanger of the device for the supply of hot tap-water is, as second heat exchanger, directly located in the secondary pipe circuit. Also owing thereto the system is simplified and the losses are reduced.

The district or block heating system constructed in accordance with the invention can be carried out in various ways. In a first embodiment the space heating appliances and the primary space of the second heat exchanger of a heat consuming installation are connected through a threeway cock between the ends of the series connections of the secondary space of the first heat exchanger and a circulating pump and the threeway cock is so connected, as to enable either the space heating appliances or the primary space of the second heat exchanger to be connected by said cock to an end of said series connection. The individual heat consuming installations of this system operate substantially in the same manner as the usual central heating systems for space heating and tap-water heating.

The system according to the invention may also be constructed in a way, in which the space heating appliances and the primary space of the second heat exchanger of a heat consuming installation are connected with their inlet ends to the outlet end of the series connection of the secondary space of the first heat exchanger and a circulating pump through a first threeway cock and with their outlet ends to the inlet end of said series connection through a controllable second threeway cock , the first threeway cock being so connected and constructed, as to enable either the space heating appliances or the primary space of the second heat exchanger to be connected by said cock to the outlet end of said series connection, the second threeway cock being constructed as a controllable gradually reversible reversing valve and being so connected , as to enable either only the space heating appliances, or only the primary space of the second heat exchanger, or both said appliances through an opening with adjustable passage area and said primary space through an opening with complementary passage area to be connected by said cock to the inlet end of said series connection, and the outlet end of the primary space of the second heat exchanger being connected through a conduit provided with a check valve closing towards said outlet end to the inlet end of the space heating appliances. In this installation the space heating appliances are supplied with return water of the primary space of the second heat exchanger, as long as hot tap-water is used and when both the space heating appliances and the tap-water heating device require heat. The series-parallel-connection of the space heating appliances and the tap-water heating device made possible in this embodiment appears to exercise a favourable influence on the stability of the space heating.

Should, in a heating system according to the invention, the heat consuming installations be connected in parallel with each other between the supply conduit and the return conduit of a primary ring main connected to a source of heat, the means for regulating, by the heat consumption, the current of the heating fluid flowing through the primary space of the first heat exchanger of a heat consuming installation may consist at least in an automatically controlled valve which is provided in the supply conduit leading towards or in the return conduit coming from said primary heat exchanger and may be so constructed, as to open, only when heat is demanded for. The said means may also include an automatically controllable valve provided in said return conduit and having a passage area which is controlled by the temperature of the heating fluid flowing through said return conduit.

Should, as in the system disclosed in the European patent application no. 0.000.401, the heat consuming installations be connected in series in a primary ring main connected to a source of heat, the means for regulating, by the heat consumption, the current of the heating fluid flowing through the primary space of the first heat exchanger of a heat consuming installation may consist at least in a threeway cock being constructed as a controllable gradually reversible reversing valve and so connected, as to enable either only the primary space of the first heat exchanger, or only a connecting conduit shunting said primary space, or both said primare space through an opening with adjustable passage area and said shunting connecting conduit through an opening with complementary passage area to be inserted in series into said ring main, said threeway cock being controlled by the demand for heat and the temperature difference across the primary space of the first heat exchanger.

The invention will be further elucidated with the aid of the drawing.

In the drawings:

Fig.1 is a diagram of a first embodiment of a district or block heating system constructed in accordance with the invention;

Fig.2 is a diagram of a second embodiment of such a system; and

Fig.3 is a diagram of a variant of the primary pipe circuit for feeding the heat consuming installations shown in Figs. 1 and 2.

In all diagrams 1 is the supply conduit and 2 is the return conduit of a ring main connected to a source of heat (not shown), in which ring main a first heating fluid, e.g. water, of high temperature, say more than 200$^{\circ}$C, and high pressure, say more than 20 atmospheres, is circulated.

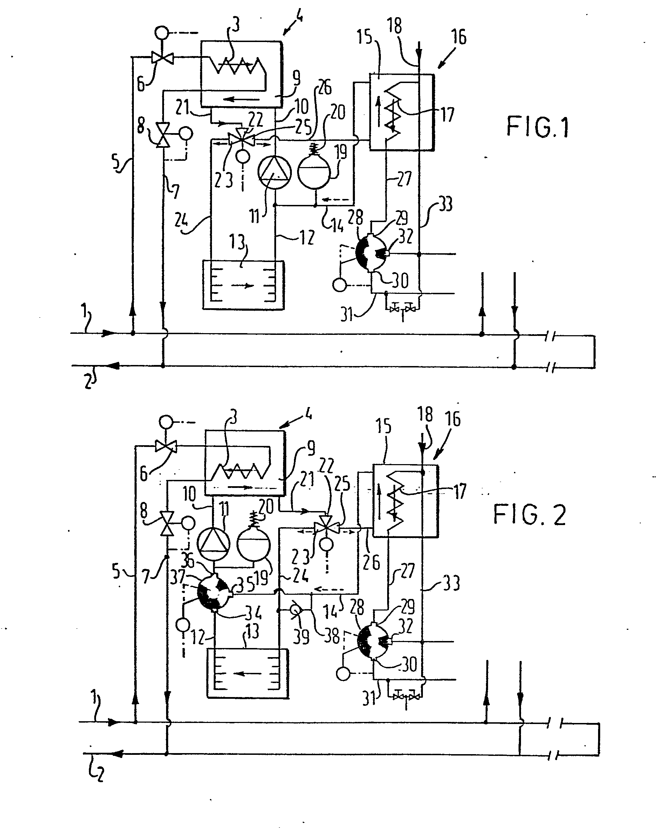

In Figs. 1 and 2 the primary spaces 3 of the first heat exchanger 4 of individual heat consuming installations are connected in parallel with one another between the supply conduit 1 and the return conduit 2. Each one of said primary spaces is connected to the supply conduit 1 through a supply conduit 5 provided with a remote controlled stop cock 6 and to the return conduit 2 through a return conduit 7 provided with a remote controlled cock 8. The stop cock 6 is closed, when the heat consuming installation does not require heat for the space heating and or the tap-water heating, but is is opened, as soon as the room thermostat (not shown) or the tap-water thermostat (not shown) gives the signal that heat is wanted for maintaining the temperature of the space(s) to be heated at or raising said temperature to the required value or for the tap-water to be heated. The cock 8 is a valve with a passage area which is controlled by the temperature of the heating fluid flowing through the return conduit 7 and sees to it that said temperature does not exceed a predetermined value.

In Fig.1 a secondary pipe circuit, in which usually water circulates, is connected to the secondary space 9 of the first heat exchanger 4. A circulating pump 11 is located in the supply conduit 10 of said secondary space 9. The suction side of said pump is connected both to the return conduit 12 of the space heating appliances, e.g. radiators 13, and to the return conduit 14 of the primary space 15 of a second heat exchanger 16 , of which the secondary space 17 is inserted into the tap-water conduit 18. An expansion tank 19 provided with a safety valve 20 is connected to the return conduit 14.

The return conduit 21 of the secondary space 9 of the first heat exchanger 4 is connected to the inlet port 22 of a threeway cock. One outlet port 23 of said cock is connected to the supply conduit 26 of the primary space 15 of the second heat exchanger 16. The threeway cock is remote controlled, for instance in such a manner as to ensure that normally the ports 22 and 23 communicate with one another, so that the radiators 13 are fed with hot water, as soon as the room thermostat or a system of room thermostat and an outside thermostat requires heat for space heating and as a result thereof the stop cock 6 is opened. The current of primary fluid flowing through the primary space 3 of the heat exchanger is so controlled, as to ensure that said fluid is cooled down to a predetermined temperature or to a lower temperature, if more heat is required as corresponds with the maximum passage area of cock 8. To that end it is assumed that the stop cok 6 has, when open, a passage area which is larger than that maximum passage area.

As soon as the tap-water heating device requires heat for raising the temperature of the tap-water to or maintaining it at the required value the tap-water thermostat takes the control over from the room thermostat and the threeway cock is reversed to port 25, so that the radiators 13 are cut off from the first heat exchanger 4 and the pump 11, but the second heat exchanger 16 is inserted into the pump circuit.

Provided in the discharge conduit 27 connected to the secondary space 17 of the second heat exchanger 16 is an automatic mixing valve 28 constructed as a gradually reversible reversing valve which is controlled by the temperature of the tapped hot water. The port 29 of said mixing valve is connected with the discharge conduit 27, the port 30 thereof with the tap conduit 31 and the port 32 thereof with the cold water supply conduit. In the illustrated position the tap conduit 31 is only connected to the discharge or hot water conduit 27. Should the temperature of the discharged hot water be too high, the mixing valve 28 will be slowly turned to the right, whereby the passage area of the port 29 is gradually decreased and the port 32 is gradually opened. Cold water from the conduit 33 is then mixed with hot water from the conduit 27. In this way the temperature of the water tapped from the conduit 31 can be maintained at an adjusted substantially constant value.

In the heating system shown in Fig.2 the primary pipe circuit 1-9 is equal to that illustrated in Fig.1. Located in the supply conduit 10 of the secondary space 9 of the first heat exchanger 4 is again the circulating pump 11 of the secondary pipe circuit and by means of the threeway cock 22,23,25, which is remote controlled by the room thermostat and the tap-water thermostat the return conduit 21 of the space 9 can again be connected either through the conduit 24 to the radiators for the space heating or through the conduit 26 to the primary space 15 of the second heat exchanger for heating the tap-water. However, in this embodiment the return conduit 12 of the radiators 13 and the return conduit 14 are connected with the suction side of the pump 11 not directly but each one through its own port 34,35, respectively, and the common port 36 of a remote controlled threeway cock 37 operating as a gradually reversible reversing valve. The threeway cock operates in such a way as to ensure that if the passage area of the port 35 gets gradually smaller the passage area of the port 34 gradually grows.

Provided between the return conduit 14 of the primary space 15 of the second heat exchanger 16 and the supply conduit 24 of the radiators 13 is a connecting conduit 38 which has a check valve 39 closing towards said return conduit.

The control of the threeway cock 37 may for example be so, as to ensure that, when only heat is required for the radiators and, consequently, the ports 22,23 of the first threeway cock 22,23,25 are in communication with each other, only the return conduit 12 of the radiators 13 is connected through the port 34 having its maximum passage area and the port 36 to the suction side of the pump 11. If, on the other hand, only heat is required for the tap-water, so that the ports 22,25 of the first threeway cock 22,23,25 are in communication with one another, the threeway cock 37 interconnects the ports 35 and 36 with maximum passage area and the port 34 is closed. However, if the space to be heated and the tap-water must be heated simultaneously, the threeway cock 37 adjusts itself so, as to guarantee that, depending on the ratio of the quantities of heat demanded for the space heating and the tap-water heating, the port 34 is brought with a predetermined passage area and the port 35 is brought with a complementary passage area into open communication with the port 36. In that case heated secondary fluid (water) flows via the ports 22,25 of the first threeway cock through the primary space 15 of the second heat exchanger 16 to the port 35 or/and through the conduit 38 and the check valve 39 to the radiators and hence through the port 34 to the port 36 and the suction side of the pump 11. The radiators are then heated either by all return water coming from the tap-water heating device, or by a portion of said return water. The possibility to connect the tap-water heating device and the radiator for space heating either completely in series or partly in series and partly in parallel appears to improve the stability of the space heating, since in that case heat can be supplied to the radiators, when hot water is tapped.

It is observed that in this embodiment the threeway cock 22,23,25 also interconnects the ports 22,25 when heat is not required. This is necessary to keep the pump circuit closed.

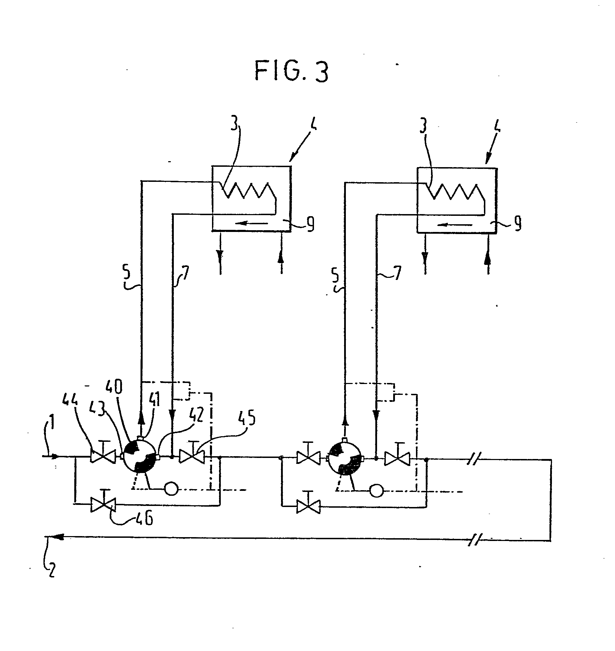

In the system illustrated in Fig.3 the individual heat consuming installations are connected in series in the primary ring main 1,2. Each primary loop 5,3,7 of such an installation is shunted by a controllable threeway cock constructed as a gradually reversible reversing valve 40 the passage area of the port 41 and that of the port 42 of which can be gradually reduced and enlarged, respectively, and vice versa, and the port 43 of which is always open. Consequently, through this threeway cock more or less hot primary fluid can be supplied, according to the requirements of heat, to the heat exchanger 4 of the heat consuming installation and less or more of this fluid is then directly supplied to the next heat consuming installation. The threeway cock 40 may be controlled by both the room thermostat and the tap-water thermostat on one hand, and by the temperature difference of the fluid across the conduits 5 and 7. In that case the adjustment of the threeway cock must be so, when heat is consumed, as to keep said temperature difference substantially constant.

The secondary space 9 of the first heat exchanger 4 may be connected to the secondary pipe circuit shown in Fig.1 or to that shown in Fig.2.

It will be apparent that the stop cocks 44,45 which are provided for cases of emergency only are normally in their open position and the stop cock 46 is normally in its closed position.

0048517

-1-

CLAIMS

1. A district or block heating system comprising a primary pipe circuit and a plurality of individual composite heat consuming installations intended at least for space heating and tap-water heating, said primary circuit containing a first heating fluid and being provided with a source of heat for heating said fluid, each one of said heat consuming installations including at least a secondary pipe circuit, in which a second heat fluid is contained, appliances for space heating and a device for heating tap-water, said secondary pipe circuit being thermally coupled through a first heat exchanger with said primary pipe circuit and through a second heat exchanger with the tap-water conduit of said device, characterized in that the space heating appliances are directly inserted in the secondary pipe circuit and means for regulating, by the heat consumption, the current of the heating fluid flowing through the primary space of the first heat exchanger are provided.

2. A district or block heating system according to claim 1, characterized in that the space heating appliances and the primary space of the second heat exchanger of a heat consuming installation are connected through a threeway cock between the ends of the series connection of the secondary space of the first heat exchanger and a circulating pump and the threeway cock is so connected, as to enable either the space heating appliances or the primary space of the second heat exchanger to be connected by said cock to an end of said series connection.

3. A district or block heating system according to claim 1, characterized in that the space heating appliances and the primary space of the second heat exchanger of a heat consuming installation are connected with their inlet ends to the outlet end of the series connection of the secondary space of the first heat exchanger and a circulating pump through a first threeway cock and with their outlet ends to the inlet end of said series connection through a controllable second threeway cock, the first threeway cock being so connected and constructed, as to enable either the space heating appliances or the primary space of the second heat exchanger to be connected by said cock to the outlet end of said series connection, the second threeway cock being constructed as a controllable gradually reversible reversing valve and being so connected, as to enable either only the space heating appliances , or only the primary space of the second heat exchanger, or both said appliances through an opening with adjustable passage area and said primare space through an opening with complementary passage area to be connected by said cock to the inlet end of said series connection, and the outlet end of the primary space of the second heat exchanger being connected through a conduit provided with a check valve closing towards said outlet end to the inlet end of the space heating appliances.

4. A district or block heating system according to claim 1,2 or 3, of which the heat consuming installations are connected in parallel with each other between the supply conduit and the return conduit of a primary ring main connected to a source of heat, characterized in that the means for regulating , by the heat consumption, the current of the heating fluid flowing through the primary space of the first heat exchanger of a heat consuming installation consist at least in an automatically controlled valve which is provided in the supply conduit leading towards or in the return conduit coming from said primary heat exchanger and is opened only when heat is demanded for.

5. A district or block heating system according to claim 4, characterized in that said means also include an automatically controllable valve provided in said return conduit and having a passage area which is controlled by the temperature of the heating fluid flowing through said return conduit.

6. A district or block heating system according to claim 1,2 or 3, of which the heat consuming installations are connected in series in a primary ring main connected to a source of heat, characterized in that the means for regulating, by the heat consumption, the current of the heating fluid flowing through the primary space of the first heat exchanger of a heat consuming installation consist at least in a threeway cock being constructed as a controllable gradually reversible reversing valve and so connected, as to enable either only the primary space of the first heat exchanger or only a connecting conduit shunting said primary space , or both said primary space through an opening with adjustable passage area and said shunting connecting conduit through an opening with complementary passage area to be inserted in series into said ring main, said threeway cock being controlled by the demand for heat and the temperature difference across the primary space of the first heat exchanger.

-----

0048517

"1/2"

FIG.1

FIG.2

FIG. 3

0048517

European Patent Office

EUROPEAN SEARCH REPORT

Application number

EP 81 20 1027

## DOCUMENTS CONSIDERED TO BE RELEVANT

| Category | Citation of document with indication, where appropriate, of relevant passages | Relevant to claim |
|---|---|---|
| | DE - A - 2 536 529 (BUDERUS)<br><br>* page 2, line 29 - page 3, line 31; figure * | 1-3 |
| | DE - A - 1 579 926 (JUNKERS)<br><br>* page 4, lines 3-11; page 4, line 24 - page 6, line 24; page 7, line 7 - page 8, line 3; figures 1,3 * | 1,2 |
| | GB - A - 1 187 601 (JUNKERS)<br><br>* page 2, line 123 - page 3, line 117; figure * | 1,2 |
| | GB - A - 1 425 508 (BROSENIUS)<br><br>* page 5, lines 57-65; figures 1,2 * | 4,5 |
| D,A | EP - A - 0 000 401 (MAJORS) | |
| A | DE - A - 2 008 123 (DEUTSCHE BAUAKADEMIE) | |

### CLASSIFICATION OF THE APPLICATION (Int. Cl.3)

F 24 D 3/08
        3/00

### TECHNICAL FIELDS SEARCHED (Int. Cl.3)

F 24 D

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-12-1981 | WEIS |

EPO Form 1503.1  06.78